(19) **Europäisches Patentamt**

**European Patent Office**

**Office européen des brevets**

(11) **EP 1 597 594 B1**

(12) **EUROPÄISCHE PATENTSCHRIFT**

(45) Veröffentlichungstag und Bekanntmachung des Hinweises auf die Patenterteilung:
**13.09.2006 Patentblatt 2006/37**

(21) Anmeldenummer: **03782169.1**

(22) Anmeldetag: **18.12.2003**

(51) Int Cl.:
*G01P 15/08* (2006.01)   *G01P 3/50* (2006.01)
*G01P 15/18* (2006.01)   *G01P 3/49* (2006.01)

(86) Internationale Anmeldenummer:
**PCT/DE2003/004212**

(87) Internationale Veröffentlichungsnummer:
**WO 2004/077070 (10.09.2004 Gazette 2004/37)**

(54) **VORRICHTUNG ZUM MESSEN VON BESCHLEUNIGUNGEN**

DEVICE FOR MEASURING ACCELERATIONS

DISPOSITIF DE MESURE D'ACCELERATIONS

(84) Benannte Vertragsstaaten:
**AT BE BG CH CY CZ DE DK EE ES FI FR GB GR HU IE IT LI LU MC NL PT RO SE SI SK TR**

(30) Priorität: **26.02.2003 DE 10309693**

(43) Veröffentlichungstag der Anmeldung:
**23.11.2005 Patentblatt 2005/47**

(73) Patentinhaber: **Hübner Elektromaschinen GmbH 10967 Berlin (DE)**

(72) Erfinder:
• **WILHELMY, Lothar 14195 Berlin (DE)**
• **HILLER, Bernhard 10115 Berlin (DE)**

(74) Vertreter: **Grünecker, Kinkeldey, Stockmair & Schwanhäusser Anwaltssozietät Leistikowstrasse 2 14050 Berlin (DE)**

(56) Entgegenhaltungen:
**DE-A- 10 125 097      DE-C- 10 039 324
FR-A- 2 745 385**

EP 1 597 594 B1

## Beschreibung

### Technisches Gebiet

Die Erfindung betrifft eine Vorrichtung zum Messen von Beschleunigungen mit Hilfe eines aus elektrisch leitendem Material bestehenden Meßmittels, das ständig vom Feld eines von mindestens einem Permanentmagneten erzeugten Magnetkreises durchsetzt wird, der bei einer Bewegung zwischen ihm und dem Meßmittel Wirbelströme im Meßmittel erzeugt, die ihrerseits zur Entstehung eines sekundären Magnetfeldes führen, dessen Änderungen durch mehrere Sensorspulen erfaßt werden.

### Stand der Technik

Eine Vorrichtung der vorstehenden Art ist aus der DE 100 39 324 C1 bekannt. Mit der bekannten Vorrichtung lassen sich ebenso wie mit anderen einschlägigen bekannten Vorrichtungen lediglich Beschleunigungen in nur jeweils einer Richtung erfassen. Aufgabe der Erfindung ist es, eine Vorrichtung zu schaffen, mit der gleichzeitig Beschleunigungen - und zwar relative Beschleunigungen zweier Körper zueinander - in zwei voneinander abweichenden Richtungen erfaßbar bzw. messbar sind.

### Darstellung der Erfindung

Gelöst wird diese Aufgabe bei einer Vorrichtung der in Betracht gezogenen Gattung erfindungsgemäß dadurch, daß mindestens ein Permanentmagnet im Zentrum von mindestens vier, in Winkelabständen um ihn verteilten Sensorspulen angeordnet ist, wobei die Sensorspulen so angeordnet sind, daß der von den Wirbelströmen im Meßmittel hervorgerufene magnetische Fluß die Sensorspulen in Richtung ihrer Achsen passiert.

Die erfindungsgemäße Beschleunigungsvorrichtung eignet sich insbesondere für den Einsatz in Werkzeugmaschinen, bei denen beispielsweise Werkzeug- oder Werkstückbewegungen in einer Ebene überwacht werden sollen.

Weitere Merkmale und Einzelheiten der Erfindung ergeben sich aus den abhängigen Ansprüchen und der nachstehenden Beschreibung mehrerer, in der beigefügten Zeichnung schematisch dargestellter Ausführungsformen der Erfindung.

### Kurze Beschreibung der Zeichnungen

Es zeigen:

Fig. 1     die grundsätzliche Anordnung des Permanentmagneten und der vier Sensorspulen einer erfindungsgemäßen Beschleunigungsmeßvorrichtung in der Draufsicht;

Fig. 2     schematisch, teilweise im Schnitt gemäß II-II in Fig. 1, die Seitenansicht einer erfindungsgemäßen Beschleunigungsmeßvorrichtung;

Fig. 3     schematisch die im Messmittel hervorgerufenen Wirbelströme bei einer Bewegung des Meßmittels relativ zum Permanentmagneten in eine erste Richtung;

Fig. 4     die im Messmittel hervorgerufenen Wirbelströme bei einer Bewegung in eine zweite Richtung;

Fig. 5     eine der Fig. 1 entsprechende Draufsicht auf eine modifizierte Anordnung;

Fig. 6     eine der Fig. 2 entsprechende Seitenansicht der modifizierten Vorrichtung;

Fig. 7     eine der Fig. 3 entsprechende Darstellung der modifizierten Vorrichtung bei einer Bewegung des Meßmittels in der ersten Richtung;

Fig. 8     eine den Fig. 2 und 6 entsprechende Seitenansicht einer Vorrichtung mit einem zylindrischen Meßmittel;

Fig. 9     eine den Fig. 1 und 5 entsprechende Draufsicht auf eine weitere modifizierte Meßeinrichtung und

Fig.10     einen Schnitt längs der Linie X-X in Fig. 9.

**Wege zur Ausführung der Erfindung**

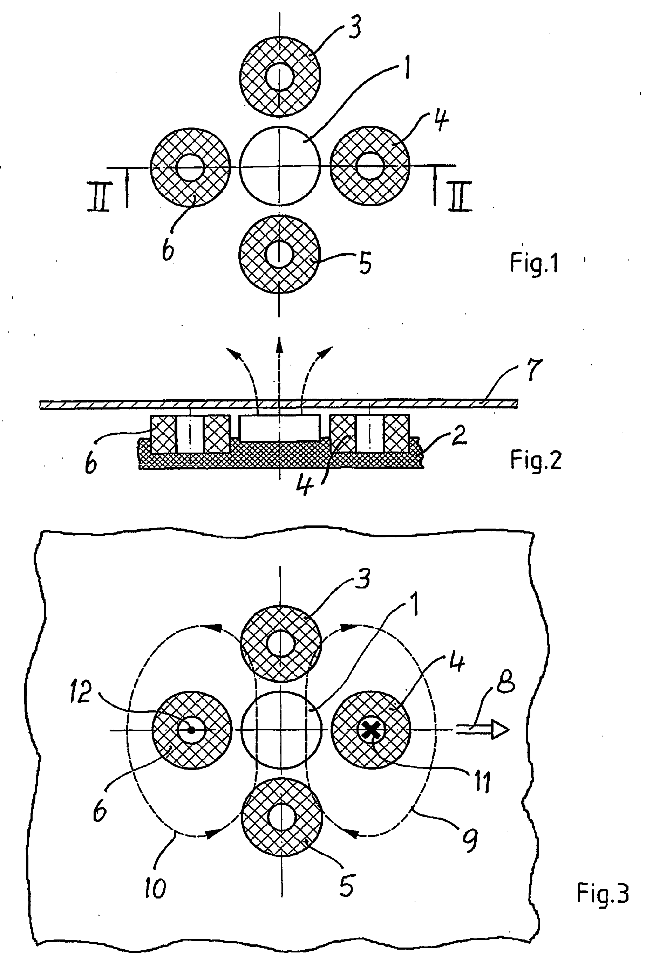

Die Figuren 1 bis 3 zeigen die wesentlichen Teile einer Beschleunigungsmeßvorrichtung zum Messen der relativen Beschleunigung in zwei unterschiedlichen Richtungen. Um einen zentralen Permanentmagneten 1 herum sind auf einem Träger 2 vier kernlose Sensorspulen 3, 4, 5 und 6 gleichmäßig, d.h. um einen Winkel von jeweils 90° zueinander versetzt, verteilt. Die Längsachsen der Sensorspulen 3 bis 6 verlaufen dabei im wesentlichen parallel zur Magnetisierungsrichtung des Permanentmagneten 1. Im Abstand vom Permanentmagneten 1 und den Sensorspulen 3 bis 6 ist ein durch einen Luftspalt von den vorgenannten Teilen getrenntes Meßmittel 7 angeordnet, das mit einem hinsichtlich seiner Relativ-Beschleunigungen zu überwachenden, nicht dargestellten Bauteil verbunden ist. Das Meßmittel 7 ist, anders als übliche Meßmittel, nicht streifenförmig sondern flächig, d.h. beispielsweise als Platte ausgebildet. Wird das aus elektrisch leitendem Material bestehende Meßmittel 7, wie in Fig. 3 durch den Pfeil 8 angedeutet, nach rechts, d.h. im Sinne einer x-Achse bewegt, so induziert der Permanentmagnet 1 im Meßmittel 7 eine Spannung, die im Meßmittel 7 Wirbelströme 9, 10 auslöst, die die ein Paar bildenden Sensorspulen 4 und 6 gegenläufig umschlingen.

Ändert sich die Geschwindigkeit des Meßmittels 7 infolge einer Beschleunigung oder einer Verzögerung relativ zum Magneten 1, so ändern sich die Wirbelströme 9 und 10 und es kommt zu einer Veränderung des Magnetfeldes, die in Figur 3 durch ein das Ende des Feldvektors darstellendes Kreuz 11 und einen die Spitze des Feldvektors darstellenden Punkt 12 angedeutet ist.

Als Folge der Änderung des Magnetfeldes werden in den Sensorspulen 4 und 6 Spannungen induziert, die so verschaltet sind, daß sie sich addieren. Die Sensorspulenpaare 4, 6 bzw. 3, 5 gleichsinnig durchsetzende Fremdfelder heben sich hingegen auf. Anders als die Sensorspulen 4 und 6 werden die Sensorspulen 3 und 5 nur marginal von den Wirbelströmen 9 und 10 berührt, wobei sich ihre magnetische Wirkung, wie aus Fig. 3 erkennbar, aufhebt. Die Sensorspulen 3 und 5 liefern bei einer Bewegung des Meßmittels 7 in Richtung des Pfeils 8 mithin keine Sensorspannungen.

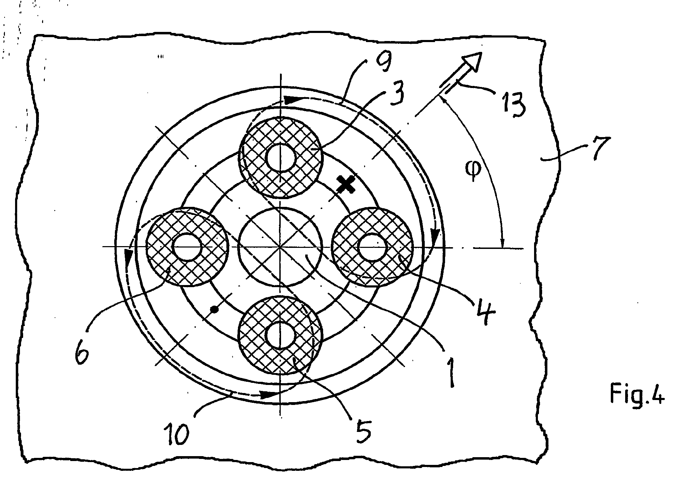

Ändert sich die Bewegungsrichtung des Meßmittels 7, d.h. bewegt es sich beispielsweise in Richtung des Pfeils 13, Figur 4, dann orientieren sich die im Meßmittel 7 induzierten Spannungen erneut senkrecht zur Bewegungsrichtung des Meßmittels 7; gleichzeitig kommt es zu einer solchen Verlagerung der im Meßmittel fließenden Wirbelströme 9, 10, daß nunmehr auch die Sensorspulen 3 und 5 umfaßt werden. Für den Fall des kreisrunden Magneten 1 gilt für die in den Sensorspulen 4 und 6 induzierte Spannung

$$u_x = u_0 \, \cos \varphi$$

und für die in den Sensorspulen 3 und 5 induzierte Spannung

$$u_y = u_0 \, \sin \varphi,$$

wobei $u_0$ die von den mechanischen und magnetischen Bedingungen abhängige Spannung ist, die für $\varphi = 0$ in den Sensorspulen 4 und 6 und für $\varphi = 90°$ in den Sensorspulen 3 und 5 induziert wird. Für den in Figur 4 dargestellten Fall mit $\varphi = 45°$ ist $u_x = u_y = \frac{1}{2} \cdot \sqrt{2}$. Für $\varphi = 90°$, d.h. bei einer Bewegung des Meßmittels 7 in Richtung der Y-Achse, liefern die Sensorspulen 3 und 5 die volle Spannung, wohingegen die Spannungen in den Sensorspulen 4 und 6 zu Null werden.

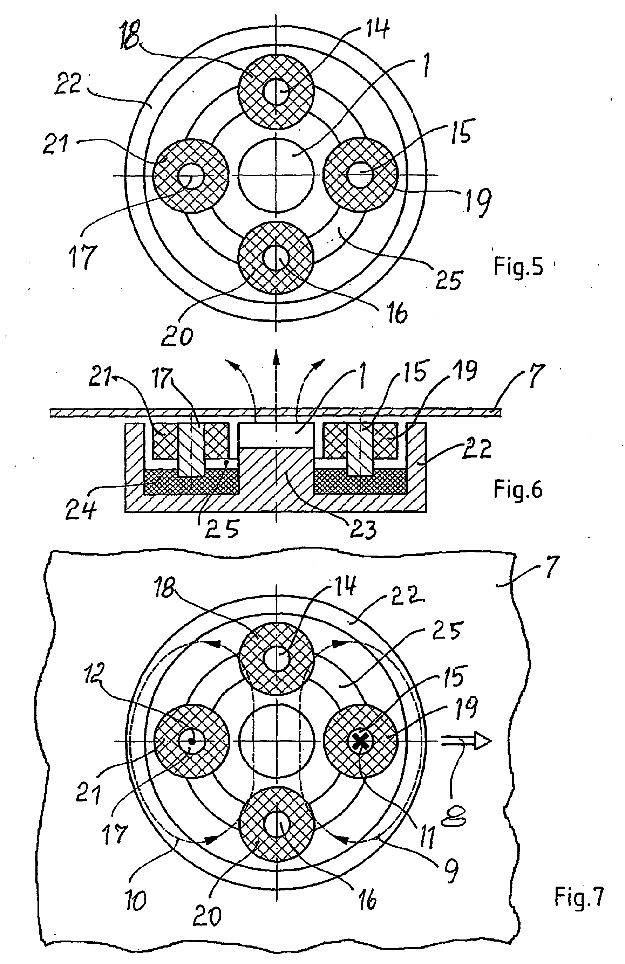

Während bei der Ausführungsform nach den Figuren 1 bis 4 die Sensorspulen 3 bis 6 kernlos ausgebildet sind, um die Induktivität und infolgedessen die elektrische Zeitkonstante der Einrichtung herabzusetzen, zeigen die Figuren 5 bis 7 eine Beschleunigungsmeßvorrichtung mit Kernen 14, 15, 16, 17 aus ferromagnetischem Material in den Sensorspulen 18, 19, 20 und 21. Da die Kerne den Magnetfluß leiten, müssen die Achsen der Sensorspulen bei entsprechender Formgebung der Kerne anders als im zuvor beschriebenen Fall nicht ohne weiteres im wesentlichen parallel zur Magnetisierungsrichtung des Permanentmagneten verlaufen. Die Sensorspulen 18, 19, 20, 21, bilden wiederum Spulenpaare, die so miteinander verschaltet sind, dass sich die Wirkung der Wirbelströme addiert, während sich die Wirkung von Fremdfeldern aufhebt. In diesem Fall ist der aus einem magnetisch leitendem Material bestehende Träger 22 topfartig ausgebildet, um einen magnetischen Rückschluß zu bilden. Der Permanentmagnet 1 ruht in der Mitte des topfförmigen Trägers 22 auf einem Sockel 23, zwischen dem und der Außenwand des Trägers 22 ein ringförmiges, nicht magnetisches Teil 24 angeordnet ist, in das ein mit die Kerne 14 bis 17 bildenden, senkrechten zylindrischen Vorsprüngen versehener Ring 25 eingebettet ist, der wie die Kerne 14 bis 17 aus magnetisch leitendem Material besteht. Durch die Verwendung von mit Kernen versehenen Sensorspulen wird eine Steigerung der Empfindlichkeit dieser Ausführungsform gegenüber der zuerst beschriebenen Ausführungsform erreicht. Gleichzeitig wird durch die topfförmige Ausbildung des Trägers 22 eine verbesserte Abschirmung der Vorrichtung gegen Fremdfelder erzielt. Diese Ausführungsform ist bei kleinen Beschleunigungswerten vorteilhaft, bei denen eine vergrößerte elektrische Zeitkonstante tolerierbar ist.

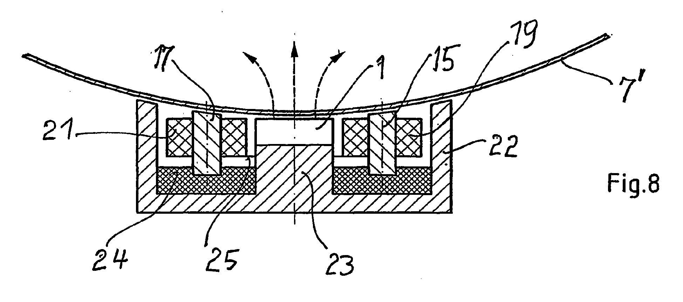

Figur 8 zeigt einen der Figur 6 entsprechenden Schnitt durch eine Ausführungsform der Erfindung, bei der nicht ein plattenförmiges,sondern ein zylindrisches Meßmittel 7' verwendet wird, das eine rotatorische Bewegung und eine Bewegung in Richtung der Rotationsachse ausführen kann. Selbstverständlich kann bei bestimmten Anwendungen auf eine vollzylindrische Ausbildung des Meßmittels verzichtet werden. Möglich ist darüber hinaus die Verwendung konkaver oder kugelförmiger bzw. teilkugelförmiger Meßmittel; in jedem Fall lassen sich Beschleunigungen oder Verzögerungen anders als bisher, in zwei Richtungen gleichzeitig erfassen.

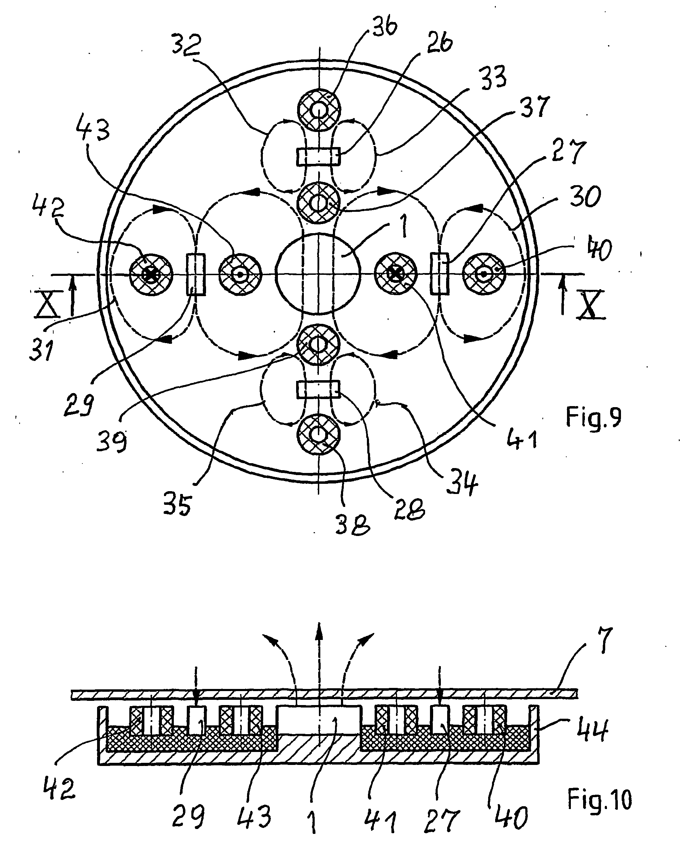

Eine weitere Steigerung der Empfindlichkeit und Reduktion des Einflusses von magnetischen Störfeldern läßt sich durch eine sogenannte Kaskadierung erreichen. Eine entsprechende Lösung ist in den Figuren 9 und 10 dargestellt. Hier sind zusätzlich zu dem im Zentrum angeordneten Permanentmagneten 1 weitere Permanentmagnete 26, 27, 28, 29 vorgesehen, die Hilfsmagnete bilden, welche eine gegenüber dem Magneten 1 entgegengesetzte Polarität aufweisen und einen Rückschluß für das bei dem Permanentmagneten 1 austretende magnetische Feld bilden. Die Magnete 27 und 29 erzeugen für den Fall, daß sich das Meßmittel, wie in den Figuren 3 und 7, in X-Richtung bewegt, ihrerseits Spannungen, die zusätzliche Wirbelströme 30 und 31 zur Folge haben. Die Magnete 26 und 28 erzeugen zwar ebenfalls kleine Wirbelströme 32, 33 bzw. 34, 35, diese induzieren in den Sensorspulen 36, 37 und 38, 39 jedoch keine Spannungen, da sie von den Wirbelströmen 32, 33 bzw. 34, 35 nicht umschlungen werden. Spannungen liefern vielmehr lediglich die Spulen 40, 41 bzw. 42, 43. Der topfförmige Träger 44 dient wie der topfförmige Träger 22 in Fig. 5 bis 8 als Rückschluß für die zusätzlichen Magnete 26 bis29 und schirmt die Anordnung zudem auch hier gegen Störfelder ab.

## Patentansprüche

1.  Vorrichtung zum Messen von Beschleunigungen mit Hilfe eines aus elektrisch leitendem Material bestehenden Meßmittels (7, 7'), das ständig vom Feld eines von mindestens einem Permanentmagneten (1) erzeugten Magnetkreises durchsetzt wird, der bei einer Bewegung zwischen ihm und dem Meßmittel (7, 7') Wirbelströme im Meßmittel erzeugt, die ihrerseits zur Entstehung eines sekundären Magnetfeldes führen, dessen Änderungen durch mehrere Sensorspulen (3 bis 6) erfaßt werden, **dadurch gekennzeichnet, daß** mindestens ein Permanentmagnet (1) im Zentrum von mindestens vier, in Winkelabständen um ihn verteilten Sensorspulen (3 bis 6) angeordnet ist, wobei die Sensorspulen (3 bis 6) so angeordnet sind, daß der von den Wirbelströmen im Meßmittel (7, 7') hervorgerufene magnetische Fluß die Sensorspulen (3 bis 6) in Richtung ihrer Achsen passiert.

2.  Vorrichtung nach Anspruch 1, **dadurch gekennzeichnet, daß** die Achsen der Sensorspulen (3 bis 6) im wesentlichen parallel zur Magnetisierungsrichtung des Permanentmagneten (1) verlaufen.

3.  Vorrichtung nach Anspruch 1 oder 2, **dadurch gekennzeichnet, daß** der Permanentmagnet (1) rund ausgebildet ist.

4.  Vorrichtung nach einem der Ansprüche 1 bis 3, **dadurch gekennzeichnet, daß** die Winkelabstände zwischen den Sensorspulen (3 bis 6) gleich sind.

5.  Vorrichtung nach einen der Ansprüche 1 bis 4, **dadurch gekennzeichnet, daß** orthogonal zu jeweils einem Paar aus zwei auf gegenüberliegenden Seiten des zentralen Permanentmagneten (1) gelegenen Sensorspulen (3, 5) jeweils ein weiteres Paar aus zwei auf gegenüberliegenden Seiten des zentralen Permanentmagneten (1) gelegenen Sensorspulen (4, 6) angeordnet ist.

6.  Vorrichtung nach einem der Ansprüche 1 bis 5, **dadurch gekennzeichnet, daß** mindestens vier Sensorspulen (3 bis 6) auf einem den zentralen Permanentmagneten (1) umschließenden Kreis angeordnet sind.

7.  Vorrichtung nach einem der Ansprüche 1 bis 6, **dadurch gekennzeichnet, daß** die sich jeweils gegenüberliegenden Sensorspulen (3, 5) bzw. (4, 6) so gewickelt oder miteinander verschaltet sind, daß sich die in ihnen induzierten Messspannungen addieren.

8.  Vorrichtung nach einem der Ansprüche 1 bis7, **dadurch gekennzeichnet, daß** der Abstand zwischen dem Permanentmagneten (1) und dem Meßmittel (7) gleich dem Abstand zwischen den dem Meßmittel (7) zugewandten Stirnflächen der Sensorspulen (3 bis 6) und dem Meßmittel (7) ist.

9. Vorrichtung nach einem der Ansprüche 1 bis 8, **dadurch gekennzeichnet, daß** der Permanentmagnet (1) im Zentrum eines magnetisch leitenden Trägers (22) angeordnet ist, der auch die Sensorspulen (18 bis 21) trägt.

10. Vorrichtung nach Anspruch 9, **dadurch gekennzeichnet, daß** der Permanentmagnet (1) auf einem zentralen Sockel (23) des magnetisch leitenden Trägers angeordnet ist.

11. Vorrichtung nach einem der Ansprüche 1 bis 10, **dadurch gekennzeichnet, daß** der Permanentmagnet (1) im Zentrum eines topfförmigen Trägers (22) angeordnet ist, dessen zylindrische Außenwand einen Rückschluß für das Feld des Permanentmagneten (1) bildet.

12. Vorrichtung nach Anspruch 11, **dadurch gekennzeichnet, daß** der Abstand zwischen dem Permanentmagneten (1) und dem Meßmittel (7) gleich dem Abstand zwischen der Stirnfläche der Außenwand des Trägers (22) und dem Meßmittel (7) ist.

13. Vorrichtung nach einem der Ansprüche 1 bis 12, **dadurch gekennzeichnet, daß** sie vier orthogonal zueinander angeordnete Spulenpaare (36, 37; 40,41; 38,39; 42,43) aufweist.

14. Vorrichtung nach Anspruch 13, **dadurch gekennzeichnet, daß** zwischen den Spulen eines jeden Spulenpaares (36,37; 38,39; 40,41; 42,43) jeweils ein Hilfsmagnet (26 bis 29) mit einer der Polarität des zentralen Magneten (1) entgegengesetzten Polarität angeordnet ist.

15. Vorrichtung nach einem der Ansprüche 1 bis 14, **dadurch gekennzeichnet, daß** die Sensorspulen kernlos ausgebildet sind.

16. Vorrichtung nach einem der Ansprüche 1 bis 14, **dadurch gekennzeichnet, daß** die Sensorspulen mit den Magnetfluß leitenden Kernen versehen sind.

17. Vorrichtung nach einem der Ansprüche 1 bis 16, **dadurch gekennzeichnet, daß** das Meßmittel (7) von einer Platte gebildet wird.

18. Vorrichtung nach einem der Ansprüche 1 bis 17, **dadurch gekennzeichnet, daß** das Meßmittel (7') von einem Zylinder oder Teilzylinder gebildet wird.

19. Vorrichtung nach einem der Ansprüche 1 bis 17, **dadurch gekennzeichnet, daß** das Messmittel von einer Kugel oder Teilkugel gebildet wird.

## Claims

1. Apparatus for measurement of accelerations with the aid of a measurement means (7, 7') which is composed of electrically conductive material and through which the field of a magnetic circuit, which is produced by at least one permanent magnet (1), passes all the time, which field produces eddy currents in the measurement means when there is any movement between it and the measurement means (7, 7'), which eddy currents themselves lead to the creation of a secondary magnetic field, changes in which are detected by a plurality of sensor coils (3 to 6), **characterized in that** at least one permanent magnet (1) is arranged at the centre of at least four sensor coils (3 to 6), which are distributed at angular intervals around it, with the sensor coils (3 to 6) being arranged such that the magnetic flux which is caused by the eddy currents in the measurement means (7, 7') passes the sensor coils (3 to 6) in the direction of their axes.

2. Apparatus according to Claim 1, **characterized in that** the axes of the sensor coils (3 to 6) run essentially parallel to the magnetization direction of the permanent magnet (1).

3. Apparatus according to Claim 1 or 2, **characterized in that** the permanent magnet (1) is round.

4. Apparatus according to one of Claims 1 to 3, **characterized in that** the angular intervals between the sensor coils (3 to 6) are the same.

5. Apparatus according to one of Claims 1 to 4, **characterized in that** a further pair of two sensor coils (4, 6), which are located on opposite sides of the central permanent magnet (1), is in each case arranged orthogonally with respect to in each case one pair of two sensor coils (3, 5) which are located on opposite sides of the central permanent magnet (1).

6. Apparatus according to one of Claims 1 to 5, **characterized in that** at least four sensor coils (3 to 6) are arranged on a circle surrounding the central permanent magnet (1).

7. Apparatus according to one of Claims 1 to 6, **characterized in that** the respectively opposite sensor coils (3, 5) and (4, 6) are wound or connected to one another in such a way that the measurement voltages induced in them are added.

8. Apparatus according to one of Claims 1 to 7, **characterized in that** the distance between the permanent magnet (1) and the measurement means (7) is equal to the distance between the end surfaces of the sensor coils (3 to 6), facing the measurement means (7), and the measurement means (7).

9. Apparatus according to one of Claims 1 to 8, **characterized in that** the permanent magnet (1) is arranged at the centre of a magnetically permeable mount (22), to which the sensor coils (18 to 21) are also fitted.

10. Apparatus according to Claim 9, **characterized in that** the permanent magnet (1) is arranged on a central cap (23) of the magnetically permeable mount.

11. Apparatus according to one of Claims 1 to 10, **characterized in that** the permanent magnet (1) is arranged at the centre of a mount (22) which is in the form of a pot and whose cylindrical outer wall forms a return path for the field of the permanent magnet (1).

12. Apparatus according to Claim 11, **characterized in that** the distance between the permanent magnet (1) and the measurement means (7) is the same as the distance between the end surface of the outer wall of the mount (22) and the measurement means (7).

13. Apparatus according to one of Claims 1 to 12, **characterized in that** the apparatus has four coil pairs (36, 37; 40, 41; 38, 39; 42, 43), which are arranged orthogonally with respect to one another.

14. Apparatus according to Claim 13, **characterized in that** one auxiliary magnet (26 to 29) of the opposite polarity to that of the central magnet (1) is in each case arranged between the coils of each coil pair (36, 37; 38, 39; 40, 41; 42, 43).

15. Apparatus according to one of Claims 1 to 14, **characterized in that** the sensor coils have no core.

16. Apparatus according to one of Claims 1 to 14, **characterized in that** the sensor coils are provided with cores which are permeable to the magnetic flux.

17. Apparatus according to one of Claims 1 to 16, **characterized in that** the measurement means (7) is formed by a plate.

18. Apparatus according to one of Claims 1 to 17, **characterized in that** the measurement means (7') is formed by a cylinder or a part of a cylinder.

19. Apparatus according to one of Claims 1 to 17, **characterized in that** the measurement means is formed by a sphere or a part of a sphere.

**Revendications**

1. Dispositif pour mesurer des accélérations à l'aide d'un moyen de mesure (7, 7') constitué d'un matériau électriquement conducteur, qui est traversé en permanence par le champ d'un circuit magnétique produit par au moins un aimant permanent (1) qui, lors d'un mouvement entre celui-ci et le moyen de mesure (7, 7') produit des courants de Foucault dans le moyen de mesure, lesquels conduisent de leur côté à la formation d'un champ magnétique secondaire dont les variations sont détectées par plusieurs bobines de détecteur (3 à 6), **caractérisé en ce qu'**au moins un aimant permanent (1) est disposé au centre d'au moins quatre bobines de détecteur (3 à 6) réparties autour de celui-ci, à intervalles angulaires, les bobines de détecteur (3 à 6) étant disposées de manière que le flux magnétique, provoqué par les courants de Foucault dans le moyen de mesure (7, 7'), traverse les bobines de détecteur (3 à 6) en direction de leurs axes.

2. Dispositif selon la revendication 1, **caractérisé en ce que** les axes des bobines de détecteur (3 à 6) s'étendent sensiblement parallèlement à la direction de magnétisation de l'aimant permanent (1).

3. Dispositif selon la revendication 1 ou 2, **caractérisé en ce que** l'aimant permanent (1) est réalisé circulaire.

4. Dispositif selon l'une des revendications 1 à 3, **caractérisé en ce que** les écartements angulaires entre les bobines de détecteur (3 à 6) sont égaux.

5. Dispositif selon l'une des revendications 1 à 4, **caractérisé en ce que**, orthogonalement à une paire de bobines de détecteur (3, 5), disposée sur des côtés opposés de l'aimant permanent (1) central, est disposée une autre paire de deux bobines de détecteur (4, 6) placée sur des côtés opposés de l'aimant permanent (1) central.

6. Dispositif selon l'une des revendications 1 à 5, **caractérisé en ce qu'**au moins quatre bobines de détecteur (3 à 6) sont disposées sur un cercle enfermant l'aimant permanent (1) central.

7. Dispositif selon l'une des revendications 1 à 6, **caractérisé en ce que** les bobines de détecteur (3, 5 ou 4, 6) opposées l'une à l'autre sont enroulées ou couplées l'une avec l'autre de manière que les tensions de mesure induites dans celles-ci s'additionnent.

8. Dispositif selon l'une des revendications 1 à 7, **caractérisé en ce que** la distance entre l'aimant permanent (1) et le moyen de mesure (7) est égale à la distance entre les surfaces frontales, tournées vers le moyen de mesure (7), des bobines de détecteur (3 à 6) et le moyen de mesure (7).

9. Dispositif selon l'une des revendications 1 à 8, **caractérisé en ce que** l'aimant permanent (1) est disposé au centre d'un support (22) magnétiquement conducteur qui porte aussi les bobines de détecteur (18 à 21).

10. Dispositif selon la revendication 9, **caractérisé en ce que** l'aimant permanent (1) est disposé sur un socle central (23) du support magnétiquement conducteur.

11. Dispositif selon l'une des revendications 1 à 10, **caractérisé en ce que** l'aimant permanent (1) est disposé au centre d'un support (22) en forme de pot dont la paroi extérieure cylindrique forme un retour pour le champ de l'aimant permanent (1).

12. Dispositif selon la revendication 11, **caractérisé en ce que** la distance entre l'aimant permanent (1) et le moyen de mesure (7) est égale à la distance entre la surface frontale de la paroi extérieure du support (22) et le moyen de mesure (7).

13. Dispositif selon l'une des revendications 1 à 12, **caractérisé en ce qu'**il comporte quatre paires de bobines (36, 37 ; 40, 41 ; 38, 39 ; 42, 43) disposées orthogonalement les unes aux autres.

14. Dispositif selon la revendication 13, **caractérisé en ce qu'**un aimant auxiliaire (26 à 29) avec une polarité opposée à celle de l'aimant central (1), est disposé entre les bobines de chaque paire de bobines (36, 37 ; 38, 39; 40, 41 ; 42, 43).

15. Dispositif selon l'une des revendications 1 à 14, **caractérisé en ce que** les bobines de détecteur sont réalisées sans noyau.

16. Dispositif selon l'une des revendications 1 à 14, **caractérisé en ce que** les bobines de détecteur sont pourvues de noyaux conduisant le flux magnétique.

17. Dispositif selon l'une des revendications 1 à 16, **caractérisé en ce que** le moyen de mesure (7) est formé par une plaque.

18. Dispositif selon l'une des revendications 1 à 17, **caractérisé en ce que** le moyen de mesure (7') est formé par un cylindre ou un cylindre partiel.

**19.** Dispositif selon l'une des revendications 1 à 17, **caractérisé en ce que** le moyen de mesure est formé par une sphère ou une sphère partielle.

Fig.1

Fig.2

Fig.3

EP 1 597 594 B1

Fig.4

10

Fig.5

Fig.6

Fig.7

Fig.8

Fig.9

Fig.10